## Europäisches Patentamt
## European Patent Office
## Office européen des brevets

(19)

(11) Veröffentlichungsnummer: **0 153 488**
**B1**

(12) **EUROPÄISCHE PATENTSCHRIFT**

(45) Veröffentlichungstag der Patentschrift:
**22.07.87**

(21) Anmeldenummer: **84116173.0**

(22) Anmeldetag: **22.12.84**

(51) Int. Cl.⁴: **H 02 J 13/00**

(54) **Verfahren zur Erzeugung, Einspeisung und Übertragung von Signalen in einem elektrischen Niederspannungs-Versorgungsnetz.**

(30) Priorität: **29.02.84 CH 967/84**

(43) Veröffentlichungstag der Anmeldung:
**04.09.85 Patentblatt 85/36**

(45) Bekanntmachung des Hinweises auf die Patenterteilung:
**22.07.87 Patentblatt 87/30**

(84) Benannte Vertragsstaaten:
**AT DE FR SE**

(56) Entgegenhaltungen:
**CH-A-404 775**
**DE-A-2 705 643**
**DE-A-2 935 769**
**FR-A-2 401 563**

**ELECTRICAL TIMES, Band 157, Nr. 11, 12. März 1970, Seiten 55-58, London, GB; A.J. BAGGOTT: "Data transmission over distribution systems"**

(73) Patentinhaber: **LGZ LANDIS & GYR ZUG AG, CH-6301 Zug (CH)**

(72) Erfinder: **Adame, Javier, Hofstrasse 33, CH- 6300 Zug (CH)**

(74) Vertreter: **Müller, Hans- Jürgen, Dipl.- Ing., Müller, Schupfner & Gauger Lucile- Grahn- Strasse 38 Postfach 80 13 69, D-8000 München 80 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1987

## Beschreibung

Die Erfindung bezieht sich auf ein Verfahren zur Erzeugung, Einspeisung und Übertragung von Signalen in einem elektrischen Niederspannungs-Versorgungsnetz nach dem Oberbegriff des Patentanspruchs 1.

Es ist seit langem bekannt, Signale zur Befehlsübertragung in Richtung des Energieflusses in einem elektrischen Versorgungsnetz durch Schalten einer Last kapazitiver, induktiver oder rein ohmscher Art zwischen zwei Netzleitungen zu erzeugen (Electrical Times, 12. 3. 1970, S. 86). Auch zur Übertragung von Informationen entgegen der Flussrichtung der Energie in einem solchen Versorgungsnetz wurde ein ähnliches Systems vorgeschlagen, bei welchem zur Erzeugung der Signale ein Kondensator zwischen die Netzleitungen geschaltet wird (CH-A- 404 775).

Der Erfindung liegt die Aufgabe zugrunde, ein Verfahren nach dem Oberbegriff des Patentanspruchs 1 zu schaffen, das gestattet, Signalformen mit geringem Oberwellengehalt und verbesserter Energieausnützung mit Hilfe einfacher und billiger Schaltteile in einem Niederspannungsnetz zu erzeugen, welche den Vorschriften über das Übersprechen genügen.

Diese Aufgabe wird durch die Merkmale des Kennzeichnens des Patentanspruchs 1 gelöst.

Das erfindungsgemässe Verfahren wird anhand einer Zeichnung näher erläutert. Es bedeuten:.

Fig. 1 ein Schema eines Signalerzeugers mit Steuerlogik;

Fig. 2 eine Signalform mit zugehörigem Schaltprogramm für Widerstände;

Fig. 3 Schaltprogramme für Widerstände und

Fig. 4 eine weitere Signalform mit zugehörigem Schaltprogramm.

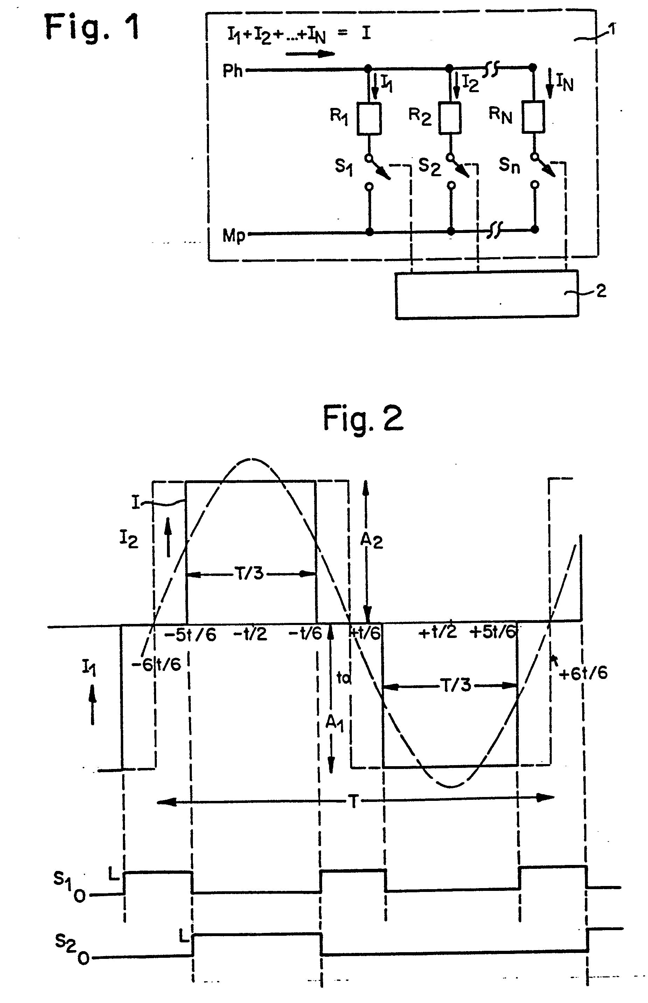

Die Fig. 1 zeigt einen einfach aufgebauten Signalerzeuger 1 mit einer zugehörigen Steuerlogik 2 zur Ausführung des erfindungsgemässen Verfahrens. Der Signalerzeuger 1 besteht aus mehreren an eine Netzleitung, beispielsweise an eine Phasenleitung Ph angeschlossenen rein ohmschen Widerständen $R_1$, $R_2$ bis $R_n$, die vorzugsweise mittels Schaltern $S_1$, $S_2$ bis $S_n$ an eine zweite Netzleitung, beispielsweise an einen Nulleiter Mp angeschlossen werden können. Die vorzugsweise einen Mikro-Computer enthaltende Steuerlogik 2 bestimmt den Zeitpunkt und die Dauer, bei welcher jeder einzelne der Schalter $S_1$, $S_2$ bis $S_n$ geschlossen ist und bei welchen somit die Widerstände $R_1$, $R_2$ bis $R_n$ zwischen die beiden Netzleitungen Ph und Mp geschaltet sind.

Die Fig. 2 zeigt eine treppenförmige, an eine gestrichelt gezeichnete Sinusschwingung angenäherte, durchgehend ausgezogene Schwingungsform des Stromes I. Diese wird erzeugt, indem durch die Steuerlogik 2 der Fig. 1 ein erster Widerstand $R_1$ und ein zweiter Widerstand $R_2$ zu verschiedenen im Schaltprogramm dargestellten Zeitpunkten und während verschiedener Zeitdauern mittels der Schalter $S_1$ und $S_2$ zwischen die Netzleitung Ph und Mp der Fig. 1 geschaltet werden. Der Gesamtstrom I ist dabei durch die Addition der durch die Widerstände $R_1$, $R_2$ fliessenden Teilströme $I + I_2$ bestimmt.

Zur Erklärung der Wirkungsweise des Signalerzeugers 1 wird bei einer zweistufigen, treppenförmigen Signalform von der Zeit to zwischen zwei entgegengesetzten Halbschwingungen und von einer Bemessung der Widerstände $R_1$, $R_2$ von 2 : 1 ausgegangen. In den Zeitperioden zwischen to und -t/6 sowie zwischen -5t/6 und -6t/6 wird durch die mittels der Steuerlogik 2 bewirkten, im Schaltprogramm mit dem Niveau L bezeichneten Schliessung des Schalters $S_1$ der Widerstand $R_1$ zwischen die Netzleitungen Ph und Mp geschaltet und ein Strom $I_1$ mit einer Amplitude $A_1$ erzeugt. In der Periode zwischen den Zeitpunkten - t/6 und -5t/6 wird ein Strom mit der Amplitude $A_1 + A_2$ durch die im zugehörigen Schaltprogramm mit dem Niveau L bezeichnete Schaltung des Widerstands $R_2$ mittels des Schalters $S_2$ zwischen die Netzleitungen Ph und Mp erzeugt. In der entgegengesetzten Halbschwingung in der Zeitdauer zwischen den Zeitpunkten to und 6t/6 der Gesamtschwingung während der Zeit T ist in der Periode zwischen to und +t/6 sowie zwischen +5t/6 und +6t/6 nur der Widerstand $R_1$ mittels des Schalters $S_1$ zwischen die Netzleitungen Ph und Mp geschaltet. Während der Periode zwischen +t/6 und +5t/6 sind dagegen beide Schalter $S_1$ und $S_2$ offen. Daher ist keiner der beiden Widerstände $R_1$ und $R_2$ mit beiden Netzleitungen Ph und Mp verbunden. Wie aus der Fig. 2 zu ersehen ist, ist also jeder der Widerstände $R_1$ und $R_2$ während 1/3 T zwischen die Netzleitungen Ph und Mp geschaltet und während 1/3 T nicht eingeschaltet, wodurch ein zweistufiges Stromsignal I mit den Teilströmen $I_1$, $I_2$ erzeugt wird, wobei die Teilströme $I_1$ und $I_2$ während je einer Periode von T/3 fliessen, wogegen während einer weiteren Periode von T/3 kein Strom I fliesst. Die Ein- und Ausschaltpunkte -7t/6, -5t/6, -t/6, +t/6 und +5t/6 der zwei Schalter $S_1$, $S_2$ sind zu diesem Zwecke also um die Hälfte der einer Dauer von T/3 entsprechenden längsten Einschaltdauer eines der beiden Schalter $S_2$ gegeneinander verschoben. Während einer weiteren Periode T/3 sind beide Schalter $S_1$, $S_2$ offen.

Die Zeitdauer T einer vollen Schwingung ist einer von Harmonischen der Netzfrequenz freien Frequenz von einem Mehrfachen der Netzfrequenz im Bereich 5 bis 15 kHz zugeordnet und somit ein Beträchtliches kleiner als die Zeitdauer einer Netzhalbschwingung. Die Schwingungen mit der Zeitdauer T können während einer oder mehreren Halbschwingungen der Netzfrequenz aufrechterhalten und auf der Empfangsseite detektiert werden. Vorteilhafterweise werden zwei verschiedene Frequenzen nach einem Frequenzsprungverfahren erzeugt, wobei gleich oder verschieden grosse Widerstände wie für die erste, der Zeitdauer T zugeordnete Frequenz mit entsprechend anderer Schaltfolge der Schalter, beispielsweise nichtgezeichneter Schalter $S_3$ und $S_4$ angewendet wird. Aus Gründen einer einwandfreien Detektierung sollen dabei die beiden zu erzeugenden Frequenzen nicht in einem harmonischen Verhältnis zueinander stehen. Die Informationen können entgegen dem Energiefluss des Netzes über Transformatoren im Niederspannungsnetz auf eine höhere Netzebene übertragen werden.

Die Kurvenform des Stromes I einer Einzelschwingung während der Zeitdauer T ist einer Sinusschwingung angenähert. Die Energie in der Grundwelle einer solchen Schwingung ist ca. 91% einer reinen Sinusschwingung. Daher ist die Energieausnützung gegenüber bis jetzt bekannten reinen Rechteckschwingungen bedeutend verbessert. Es entstehen nur geringe Amplituden von Harmonischen einer solchen, nach dem erfindungsgemässen Verfahren erzeugten Stromschwingung I, die innerhalb der amtlich gestatteten Grenzen liegen.

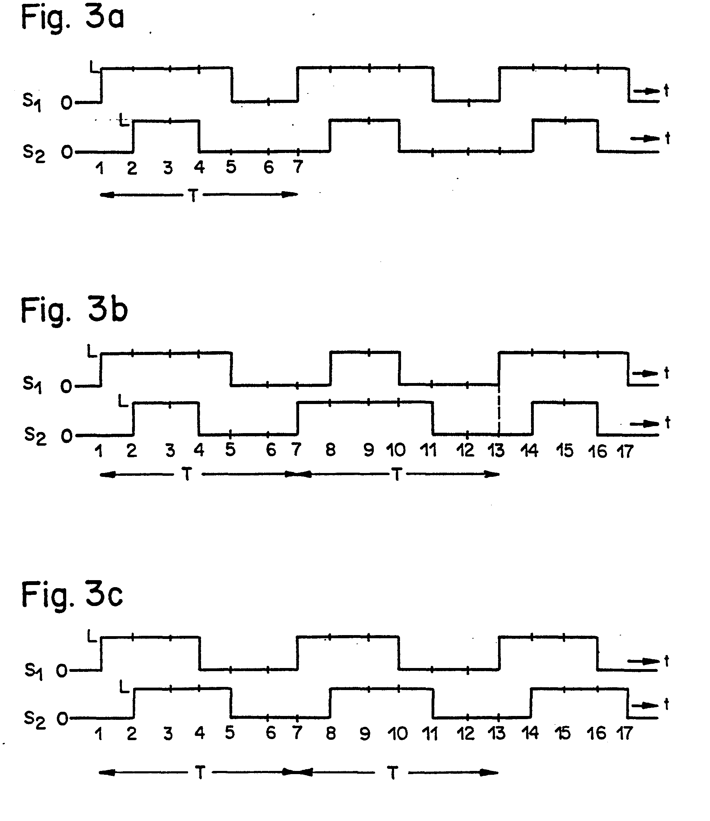

Die Signalform für den Strom I der Fig. 2 kann jedoch auch gemäss den Schaltprogrammen für die Schalter $S_1$ und $S_2$ mittels gleichgrosser Widerstände $R_1$ und $R_2$ nach der Fig. 3 erzeugt werden. In jeder der Fig. 3a, 3b und 3c ist der Zustand der Schalter $S_1$ und $S_2$ dargestellt, wobei 0 einen offenen Schalter $S_1$, $S_2$ und L einen geschlossenen Schalter $S_1$, $S_2$ bezeichnet.

In der Fig. 3a ist die Periode einer Schwingung T in gleiche Perioden von $t_1$ bis $t_7$ unterteilt. Der Schalter $S_1$ ist während der Periode von $t_1$ bis $t_5$ geschlossen und damit der Widerstand $R_1$ zwischen die Netzleitungen Ph und Mp geschaltet, während der Schalter $S_2$ während der Periode $t_2$ bis $t_4$ geschlossen und der zugeordnete Widerstand $R_2$ zwischen die Netzleitungen geschaltet ist. Man sieht, dass die beiden Schalter $S_1$ und $S_2$ zum Teil gleichzeitig, aber verschieden lang geschlossen sind. Die Dauer der Schaltungen verhält sich 2/3 T für den geschlossenen Schalter $S_1$, 1/3 T für den Schalter $S_2$ und gleichzeitige Öffnung der beiden Schalter $S_1$, $S_2$ während weiteren 1/3 T. Die Widerstände $R_1$ und $R_2$ werden infolge der verschiedenen Schliesszeiten der Schalter $S_1$, $S_2$ ungleich belastet. Um die Widerstände $R_1$ und $R_2$ der Fig. 1 gleichmässig zu belasten, kann das Schaltprogramm nach der Fig. 3b angewendet werden. Dann ist während einer ersten Periode T der Schalter $S_1$ von $t_1$ bis $t_5$ und der Schalter $S_2$ von $t_2$ bis $t_4$ geschlossen und beide Schalter von $t_5$ bis $t_7$ gleichzeitig offen. Während der nachfolgenden Periode T ist umgekehrt der Schalter $S_1$ nur von $t_8$ bis $t_{10}$, der Schalter $S_2$ dagegen von $t_7$ bis $t_{11}$ geschlossen und beide Schalter $S_1$, $S_2$ gemeinsam von $t_{11}$ bis $t_{13}$ offen. Diese abwechselnde Folge wiederholt sich in den nachfolgenden Perioden T.

Beim Schaltprogramm nach der Fig. 3c werden die Widerstände $R_1$, $R_2$ nach der Fig. 1 ebenfalls gleichmässig belastet, indem die Schaltperioden für die beiden Schalter $S_1$ und $S_2$ immer gleichlang, aber gegeneinander um einen Drittel der Einschaltdauer verschoben gewählt werden. Der Schalter $S_1$ ist während der Perioden $t_1$ bis $t_4$, $t_7$ bis $t_{10}$ usw. geschlossen; der Schalter $S_2$ dagegen in den Perioden $t_2$ bis $t_5$, $t_8$ bis $t_{11}$ usw.

Beide Schalter $S_1$, $S_2$ sind immer in den Perioden $t_5$ bis $t_7$, $t_{11}$ bis $t_{13}$ usw., die 2/3 der Anschaltdauer jeder der Schalter $S_1$, $S_2$ entspricht, gleichzeitig offen.

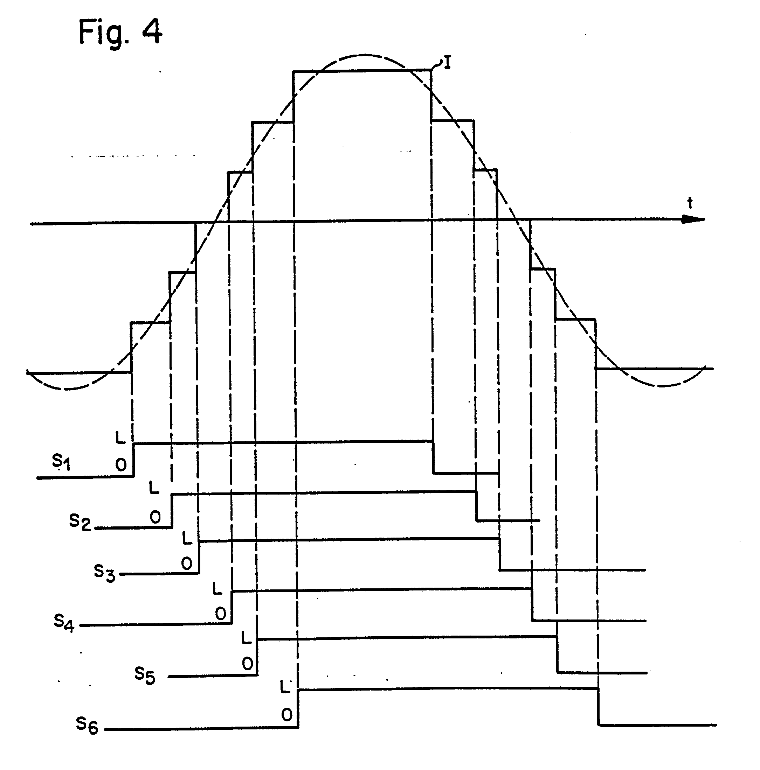

Die Annäherung der Stromkurve an die Sinusform kann bei Verwendung von mehr als zwei Widerständen noch verbessert werden. So zeigt die Fig. 4 eine Halbwelle des treppenförmig verlaufenden, mit ununterbrochenen Strichen gezeichneten Stromes I mit der idealen, gestrichelt ausgeführten Sinusform. Unterhalb der Stromkurve sind die zugehörigen Einschaltzeiten der Schalter $S_1$ bis $S_6$ eingetragen, welche sechs gleich grosse Widerstände $R_1$ bis $R_6$ schalten, wobei das Niveau L Einschaltung bedeutet. In diesem Fall sind die Einschaltzeiten der einzelnen Schalter $S_1$ bis $S_6$ leicht voneinander verschieden. Dies kann mittels des entsprechend programmierten Mikro-Computers in der Steuerschaltung 2 der Fig. 1 ausgeführt werden. Eine solche Programmierung ist für den Fachmann bekannt und braucht hier nicht näher erklärt zu werden. Der Gesamtstrom I durch sämtliche Widerstände $R_1$ bis $R_6$ ergibt sich durch Addition der Teilströme durch jeden Widerstand $R_1$ bis $R_6$ die mittels der Schalter $S_1$ bis $S_6$ zwischen die Netzleitungen geschaltet werden. Treppenförmige Stromsignalformen ähnlich jener der Fig. 4 können auch mit Hilfe von geeignet abgestuften Widerständen erzeugt werden, welche in gleichen Zeitabständen mittels mehrerer Schalter $S_1$ bis $S_n$ zwischen die Netzleitungen Ph und Mp der Fig. 1 geschaltet werden. Solche Widerstände oder die Schaltabstände können beispielsweise binär abgestuft sein, so dass eine Digital/Analog-Umwandlung erfolgt. Auch in diesem Fall ist der Gesamtstrom I durch die addierten Teilströme $I_1$ bis $I_n$ durch die einzelnen geschalteten Widerstände $R_1$ bis $R_n$ bestimmt.

Das beschriebene Verfahren erlaubt mit einfachen Mitteln Ströme mit Signalfrequenzen von 5 kHz bis 15 kHz innerhalb einer oder mehrerer Halbwellen der Netzspannung zu erzeugen, die sich für eine Übertragung von Informationen entgegen dem Energiefluss von einer Niederspannungsebene in eine höhere Netzebene über die dazwischenliegenden Transformatoren hinweg eignen. Der Verlauf der Signalströme ist dabei angenähert sinusförmig, wodurch eine verbesserte Energienutzung gegenüber den bekannten Verfahren erzielt wird. Die erzeugten Stromsignale besitzen geringen Oberwellengehalt, der den amtlichen Vorschriften vollständig Rechnung trägt, so dass ein Übersprechen in andere Teile des Netzes vermieden wird.

**Patentansprüche**

1. Verfahren zur Erzeugung, Einspeisung und Übertragung von Signalen in ein elektrisches Niederspannungs-Versorgungsnetz durch Schalten einer Last ($R_1$, $R_2$, $R_N$) zwischen zwei Netzleitungen Ph, Mp, dadurch gekennzeichnet, dass ein treppenförmiges Stromsignal (I) mit um Grössenordnungen höherer Frequenz als die Frequenz des Versorgungsnetzes durch entsprechendes Schalten von mindestens zwei, rein ohmschen Widerständen ($R_1$, $R_2$, $R_N$) in vorbestimmter Folge während mindestens einer gleichartigen Halbwelle der Netzspannung zwischen Leitungen (Ph, Mp) des Niederspannungsnetzes erzeugt wird.

2. Verfahren nach Anspruch 1, dadurch gekennzeichnet, dass zwei Widerstände ($R_1$, $R_2$) verwendet werden, die mittels gesteuerter Schalter ($S_1$, $S_2$) zwischen Netzleitungen (Ph, Mp) schaltbar sind.

3. Verfahren nach Anspruch 2, dadurch gekennzeichnet, dass zwei Widerstände ($R_1$, $R_2$) mit einem Widerstandsverhältnis von 2 : 1 benützt werden.

4. Verfahren nach Anspruch 3, dadurch gekennzeichnet, dass die Ein- und Ausschaltpunkte der zwei Schalter ($S_1$, $S_2$) um die Hälfte der längsten, einer Periode von T/3 der Schwingungszeit T entsprechenden Einschaltdauer eines der beiden gegeneinander verschoben sind und dass während einer weiteren Periode von T/3 beide Schalter ($S_1$, $S_2$) offen sind.

5. Verfahren nach Anspruch 2, dadurch gekennzeichnet, dass zwei gleichgrosse Widerstände ($R_1$, $R_2$) verwendet werden.

6. Verfahren nach Anspruch 5, dadurch gekennzeichnet, dass die zwei Widerstände ($R_1$, $R_2$) mit Hilfe der zugeordneten Schalter ($S_1$, $S_2$) mit einem Verhältnis der Einschaltzeiten von 2 : 1 zwischen die Netzleitungen (Ph, Mp) geschaltet werden (Fig. 3a).

7. Verfahren nach Anspruch 5, dadurch gekennzeichnet, dass das Verhältnis der Einschaltzeiten der beiden Schalter ($S_1$, $S_2$) abwechseind 2 : 1 und 1 : 2 gewählt werden (Fig. 3b)

8. Verfahren nach Anspruch 5, dadurch gekennzeichnet, dass die Einschaltdauer der Schalter ($S_1$, $S_2$) gleich gross, aber um einen Drittel der Einschaltdauer gegeneinander verschoben ist und dass während einer weiteren, in der Länge 2/3 der Einschaltdauer eines einzelnen Schalters ($S_1$ $S_2$) entsprechenden Periode beide Schalter ($S_1$, $S_2$) offen sind (Fig. 3c).

9. Verfahren nach Anspruch 3 oder 5, dadurch gekennzeichnet, dass ein zweistufiges Stromsignal (I) mit den Teilströmen ($I_1$ + $I_2$) erzeugt wird, wobei die Teilströme ($I_1$ und $I_2$) während je einer Periode von T/3 fliessen, wogegen während einer weiteren Periode T/3 kein Strom fliesst, wobei T die Periode einer ganzen Schwingung des Stromes (I) darstellt.

10. Verfahren nach Anspruch 1, dadurch gekennzeichnet, dass mehr als zwei Widerstände ($R_1$ bis $R_n$) mittels zugeordneter Schalter ($S_1$ bis $S_n$) geschaltet werden (Fig. 4).

11. Verfahren nach Anspruch 10, dadurch gekennzeichnet, dass durch geeignete Wahl der Grösse der Widerstände ($R_1$ bis $R_n$) oder der Einschaltzeiten der Schalter ($S_1$ bis $S_n$) mehreren Informationen zugeordnete Signalstromfrequenzen nach einem Frequenzsprungverfahren erzeugt werden.

**Claims**

1. A process for generating, feeding in and transmitting signals in an electrical low-voltage supply network by switching a load ($R_1$, $R_2$...$R_N$) between two network conductors (Ph, Mp), characterised in that a stepped current signal (I) at a frequency which is orders of magnitude higher than the frequency of the supply network is generated by correspondingly switching at least two purely ohmic resistors ($R_1$, $R_2$...$R_N$) in a predetermined sequence during at least one similar halfwave of the network voltage between conductors (Ph, Mp) of the low-voltage network.

2. A process according to claim 1 characterised by using two resistors ($R_1$, $R_2$) which can be switched between network conductors (Ph, Mp) by means of controlled switches ($S_1$, $S_2$).

3. A process according to claim 2 characterised by using two resistors ($R_1$, $R_2$) with a resistance ratio of 2:1.

4. A process according to claim 3 characterised in that the switching-on and switching-off points of the two switches ($S_1$, $S_2$) are displaced relative to each other by half the longest switch-on time of one of the two switches, corresponding to a period of T/3 of the oscillation time T and that both switches ($S_1$, $S_2$) are open during a further period of T/3.

5. A process according to claim 2 characterised by using two resistors ($R_1$, $R_2$) of equal resistance.

6. A process according to claim 5 characterised in that the two resistors ($R_1$, $R_2$) are switched between the network conductors (Ph, Mp) by means of the associated switches ($S_1$, $S_2$), with a ratio between the switch-on times of 2:1 (Figure 3a).

7. A prccess according to claim 5 characterised in that the ratio of the switch-on times of the two switches ($S_1$, $S_2$) is alternately selected at 2:1 and 1:2 (Figure 3b).

8. A process according to claim 5 characterised in that the switch-on times of the switches ($S_1$, $S_2$) are equal but are displaced relative to each other by a third of the switch-on time and that both switches ($S_1$, $S_2$) are open during a further period corresponding in length to two-thirds of the switch-on time of an individual switch ($S_1$, $S_2$) (Figure 3c).

9. A process according to claim 3 or claim 5 characterised in that a two-stage current signal (I) is generated, with the partial currents ($I_1 + I_2$), wherein the partial currents ($I_1$ and $I_2$) each flow during a respective period of T/3 whereas during a further period T/3 no current flows, wherein T represents the period of a complete oscillation of the current (I).

10. A process according to claim 1 characterised in that more than two resistors ($R_1$ to $R_n$) are switched by means of associated switches ($S_1$ to $S_n$) (Figure 4).

11. A process according to claim 10 characterised in that signal current frequencies associated with a plurality of items of information are generated in accordance with a frequency jump procedure by suitable choice of the size of the resistors ($R_1$ to $R_n$) or the switch-on times of the switches ($S_1$ to $S_n$).

**Revendications**

1. Procédé pour produire, injecter et transmettre des signaux dans un réseau d'alimentation électrique à basse tension, par commutation d'une charge ($R_1$, $R_2$,...$R_N$) entre deux lignes (Ph, Mp) du réseau, caractérisé en ce que l'on produit un signal de courant (I) en forme d'escalier possédant une fréquence supérieure de plusieurs ordres de grandeur à la fréquence du réseau d'alimentation, au moyen d'une commutation correspondante d'au moins deux résistances purement ohmiques ($R_1$, $R_2$... $R_N$) selon une succession prédéterminée pendant au moins une alternance de même type de la tension du réseau entre deux lignes (Ph, Mp) du réseau à basse tension.

2. Procédé selon la revendication 1, caractérisé en ce que l'on utilise deux résistances ($R_1$, $R_2$), qui peuvent être branchées au moyen d'interrupteurs commandés ($S_1$, $S_2$) entre des lignes (Ph, Mp) du réseau.

3. Procédé selon la revendication 2, caractérisé en ce qu'on utilise deux résistances ($R_1$, $R_2$) dont le rapport des valeurs est égal à 2:1.

4. Procédé selon la revendication 3, caractérisé en ce que les instants de branchement et de débranchement des deux interrupteurs ($S_1$, $S_2$) sont décalés l'un par rapport à l'autre de la moitié de la durée la plus longue de branchement, qui correspond à une période T/3 de la durée d'oscillation T, de l'un des deux interrupteurs, et que les deux interrupteurs ($S_1$, $S_2$) sont ouverts pendant une autre période T/3.

5. Procédé selon la revendication 2, caractérisé en ce que l'on utilise deux résistances ($R_1$, $R_2$) identiques.

6. Procédé selon la revendication 5, caractérisé en ce que l'on branche les deux résistances ($R_1$, $R_2$) à l'aide des interrupteurs ($S_1$, $S_2$) associés, avec un rapport des durées de branchement égal à 2:1, entre les lignes (Ph, Mp) du réseau (figure 3a).

7. Procédé selon la revendication 5, caractérisé en ce qu'on choisit le rapport des durées de branchement des deux interrupteurs ($S_1$, $S_2$) égal en alternance à 2:1 et à 1:2 (figure 3b).

8. Procédé selon la revendication 5, caractérisé en ce que les durées de branchement des interrupteurs ($S_1$, $S_2$) sont identiques, mais sont décalées l'une par rapport à l'autre d'un tiers de la durée de branchement, et que pendant une autre période, qui correspond aux 2/3 de la durée de branchement d'un interrupteur individuel ($S_1$, $S_2$), les deux interrupteurs ($S_1$, $S_2$) sont ouverts (figure 3c).

9. Procédé selon la revendication 3 ou 5, caractérisé en ce qu'on produit un signal de courant (I) à deux échelons avec les courants partiels ($I_1 + I_2$), les courants partiels ($I_1$ et $I_2$) circulant respectivement pendant une période égale à T/3, tandis qu'aucun courant ne circule pendant une autre période T/3, T représentant la période d'une oscillation complète du courant (I).

10. Procédé selon la revendication 1, caractérisé en ce que l'on branche plus de deux résistances ($R_1$ à $R_n$) à l'aide d'interrupteurs ($S_1$ à $S_n$) associés (figure 4).

11. Procédé selon la revendication 10, caractérisé en ce que, grâce au choix approprié de la valeur des résistances ($R_1$ à $R_n$) ou des durées de branchement des interrupteurs ($S_1$ à $S_n$), on produit des fréquences, associées à plusieurs informations, des courants de signal selon un procédé à saut de fréquence.

# Fig. 1

$$I_1 + I_2 + \ldots + I_N = I$$

# Fig. 2

# Fig. 3a

# Fig. 3b

# Fig. 3c

# Fig. 4